# EUROPEAN PATENT SPECIFICATION

(11) **EP 2 256 081 B1**
(45) Date of publication and mention of the grant of the patent: **10.07.2013**
(21) Application number: 10005504.5
(22) Date of filing: 27.05.2010
(51) Int. Cl.: B66F 9/06, B62B 3/06, B65B 11/02, B66F 9/075, B62B 5/00

(54) **Support structure to join an electric pallet jack to a functional device**
Tragestruktur zum Anschließen eines elektrischen Gabelstaplers an eine Funktionsvorrichtung
Structure de support pour fixer un transpalette électrique sur un dispositif fonctionnel

(30) Priority: 29.05.2009 ES 200901362
(43) Date of publication of application: 01.12.2010
(73) Proprietor: Aranguren Comercial del Embalaje SL, 46019 Valencia (ES)
(72) Inventor: Sergio Llopis Soñés, 46612 Corbera, Valencia (ES)
(74) Representative: Soler Lerma, Santiago

(56) References cited:
- EP-A2- 1 489 004
- WO-A2-2007/105095
- US-B1- 6 732 871

## Description

This invention, as its name implies, consists in a pallet jack with a support structure which assembled upon it, allows a functional element that may require power supply to be attached to such structure, such as for example, amongst other things, a crane or a packer, said structure allowing the easy replacement of the batteries supplying power to the pallet jack.

This invention also includes a packing machine that uses said structure.

The field of the art this invention applies to is that of transportable machinery and packing machinery.

### BACKGROUND

The machines known as pallet jacks are very useful for the transport and handling of bales and palletised loads.

These machines perform a vertical movement to slightly lift the load from the floor and thus be able to transport it, and the travelling movement of the pallet lack itself.

Both the vertical movement and the travelling movement can be achieved by the operator's own strength or using electric engines.

In the case of using electric motors for both movements and since pallet jacks can move freely, they must include batteries to supply power to the engines, batteries that will be bigger the greater the force required, and it is common for such batteries to reach weights of 80 kg.

Such batteries must be extracted vertically for safety reasons, and therefore the top of the body of this type of electric pallet jacks must be accessible.

This means that these additional components that are incorporated to the pallet jacks must prevent the blockage of the vertical access to the batteries.

Until now, the accepted solution has been, to the best of our knowledge, that of adding such functional components after the body of the pallet jacks, that is, on the support elements that are the front extensions inserted into the base of the pallets.

Of the patents reviewed that add a functional element to pallet jacks we find patent ES2271738 regarding a pallet jack with the features of the preamble of claim 1 and a packing machine comprising means to be attached to a pallet jack, such means essentially consisting in that the packing machine itself has hollow support elements that are suitable for sheathing the support elements of the pallet jack, thus being temporarily attached to it but in that case the packing machine has to be fixed to a pallet jack every time is to be used so with the add problem that no all pallet jack support elements have same size so in fact it is common to have the pallet jack permanent attached to the packing machine.

Utility model ES1061379ES also relates to lifting means that can be coupled to a pallet jack wherein a structure is fixed onto the support elements of the pallet jack, which structure includes hollow support elements that are suitable to clamp onto those of the pallet jack, these hollow components being the ones that rise with the same problem said.

Since said solutions are mounted on the support elements of the pallet jacks they reduce their useful surface, and therefore if we wish to maintain the useful surface of the support elements these must be extended, which increases the size of the machine In detriment of its manoeuvrability.

### DESCRIPTION OF THE INVENTION

In order to solve the problems exposed in the invention proposed we refer essentially to a hollow structure located on top of the central body of the pallet jack, either on the casing that covers it or replacing such casing, and joined to the pallet jack by means that allow said structure to move enough as to free the top part of the body of the pallet jack in order to allow replacing the batteries.

The movement is achieved as a result of there being a runner on each side that is integrally joined to the structure and that runs along two parallel lines of pulley wheels.

The lower edge of the side of the structure rests on the lower line, which may incorporate a guide, whereas the upper line is framed inside a notch existing in the side, which may also incorporate a guide.

Next to the upper line of pulley wheels there is a stop on which it will butt when it reaches the end of the notch.

The structure has, in broad terms, an inverted U-shape with a series of reinforcements and struts to provide strength and it clamps onto the body of the pallet jack covering the sides, the top and partially covering the front.

Since the structure has an inverted U-shape, a series of reinforcements have been located on the front to provide strength to the assembly.

In order to favour the stability of the assembly when the structure is shifted with respect to the body of the pallet jack, wheels have been incorporated onto the front.

Functional elements can be fixed to the top part of the structure such as, for example, a packing machine.

### BRIEF DESCRIPTION OF THE DRAWINGS

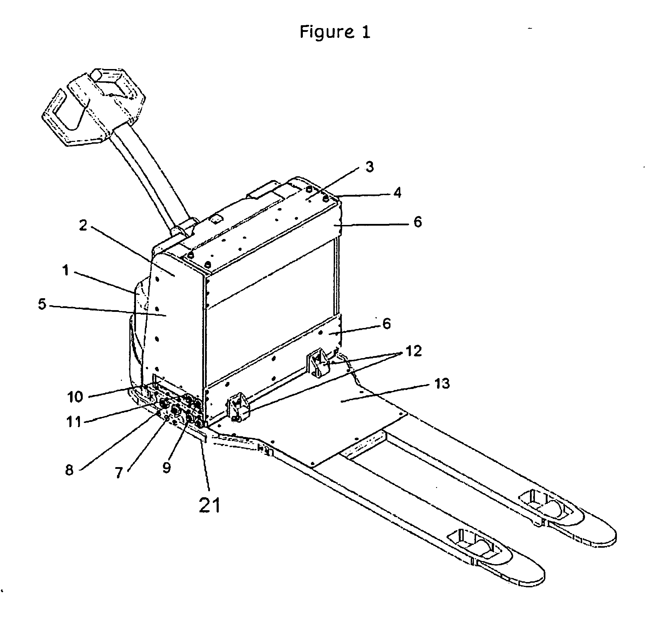

FIGURE 1 shows the support structure (2) mounted on a pallet jack (1) where we can see the top part (3) and sides (4) and (5) of said structure, as well as the reinforcement elements that join both sides along the front (6), and where we can highlight the means that allow the shifting of said structure comprising a lower line of joined pulley wheels (7) on which rests the lower edge of the structure, which incorporates a guide (8) and a second line of pulley wheels (9) in a higher position that show through a notch (10) that exists in the structure and where a stop (11) is also visible.

The support wheels (12) incorporated in the structure on its front can also be seen, as well as the platform generated by the joining of the support elements of the pallet jack (13) and the defences that prevent the involuntary introduction of objects under the structure (21).

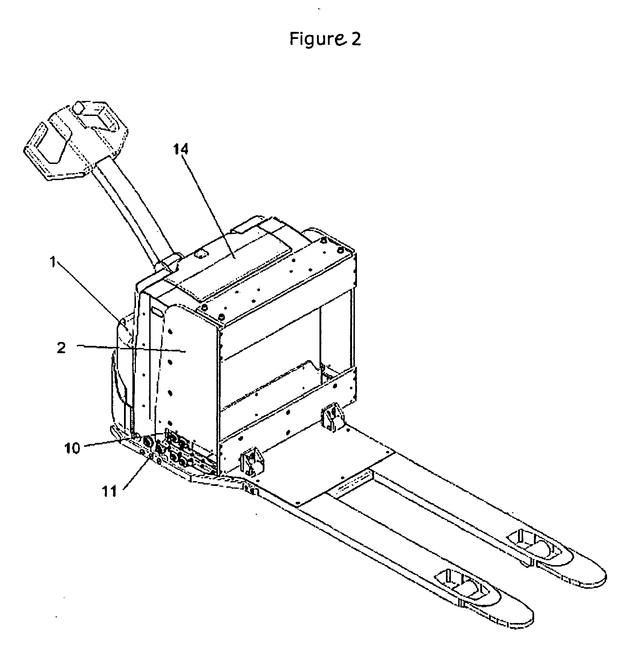

FIGURE 2 also shows the support structure (2), which is now in a forward position with respect to the body of the pallet jack, leaving the closing lid of the batteries (14) free and available, and where we can see how the stop (11) prevents the structure from advancing further by abutting against the end of the notch (10).

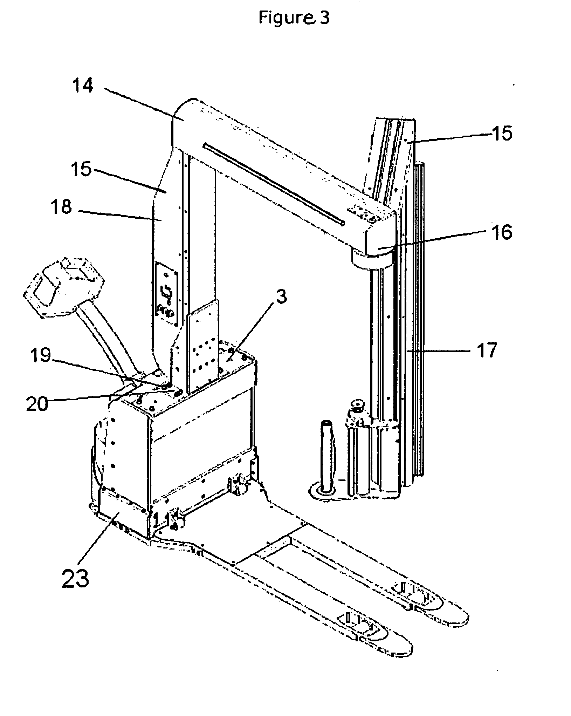

FIGURE 3 shows the structure assembled on a pallet jack, where a packing device of the type comprising two inverted L-shaped branches where one is fixed (14) and the other (15) rotates about an axis (16), showing that the outer vertical branch (15) is shorter than the mobile vertical branch (17) and showing a rear reinforcement (18) that is joined by the base to the structure by joining means, especially openings and screws (19) that coincide at the base of the branch of the packing machine (20) and at the top of the structure (3).

This figure shows the system allowing the shifting of the structure (22) covered by a casing.

### DESCRIPTION OF AN EMBODIMENT OF THE INVENTION

The invention described below and the examples illustrating it show an embodiment that is not limiting, and we consider included in the scope of this document other embodiments of equal or equivalent technical solutions.

First of all, we propose as an invention a structure that partially covers the main body of a pallet jack, incorporating means that allow the horizontal shifting of such cover so as to reveal the top part of the body of the pallet jack in order to allow changing its batteries.

The structure has an inverted U-shape of suitable width and extends over the top part and the sides of the main body of the pallet jack.

At the front of the structure there are a series of reinforcement parts that join the sides and the top portions.

At the bottom of the sides there are notches that house inside them a line of pulley wheels fixed to the body of the pallet jack.

The lower edge of the sides rest upon another line of pulley wheels that are also fixed to the body of the pallet jack.

Both the lower edges of the sides and the inner edges of the notch are reinforced with guides.

Also fixed to the body of the pallet jack and inside the area coinciding with the notch there is a stop.

On the top portion of the structure there are or it is possible to place ideal means for attaching the intended functional element.

The structure as described can slide thanks to the action of the pulley wheels, their path being that allowed by the length of the notch.

In order to prevent undesired objects from being trapped under the flap of the structure, defences have been installed vertically with said structure.

The structure proposed allows the incorporation to the pallet jack of different tools amongst which we highlight as an example and claim the following, since it is of special interest.

### EXAMPLE

Support structure, assembled on a pallet jack, onto which a packing device has been attached of the type comprising two inverted L-shape arms where one, the outer arm, is fixed, whereas the inner arm rotates and carries the spool of the material to be wrapped.

To do this the structure joined to the pallet jack has on its top part a series of through openings that are adequate for screwing onto them the main column of a packing machine.

The packing device is of the type is shown in patent P200802243, with a series of modifications.

Amongst the modifications necessary to be able to mount a packing machine of this type onto a structure joined to a pallet jack we find:
- A recess of the outer vertical branch or the main column, which is reduced in a distance similar to the distance existing between the support means of the pallet jack and the top portion of the structure it is fixed onto.
- A rear reinforcement of the main column.
- Inclusion of a locking system to prevent the packing machine from operating when the pallet jack is moving.

We have referred to document P200802243 since it proposes a machine that, amongst other features, is built of a lightweight material, thus enabling the movement of the structure, shifting the packing machine joined integrally to it, without jeopardising the stability of the assembly.

## Claims

1. PALLET JACK (1) WITH A SUPPORT STRUCTURE wherein that structure has an inverted U-shape body of suitable width, consisting of at least one top portion (3) and two sides, (4,5) this structure being of the suitable size and shape to cover and adapt to the main body of the pallet jack having means to attach a functional device to said structure **characterised in that** it comprises:
• means (1,9) to allow the forward shifting of structure until revealing the top portion of the body of the pallet jack.
• means (11,12) to ensure the stability of the assembly in the shifted position.

2. PALLET JACK WITH A SUPPORT STRUCTURE according to claim 1, **characterised in that** on its front portion it incorporates reinforcement elements consisting of essentially laminated parts that run from one side to the other, and which can also be joined to the top portion.

3. PALLET JACK WITH A SUPPORT STRUCTURE according to claims 1 and 2 and **characterised in that** the means that allow it to shift forward comprise at least one sliding element on each side that slides between two lines of pulley wheels joined to the pallet jack, its movement being Integral to the rest of the structure.

4. PALLET JACK WITH A SUPPORT STRUCTURE according to claim 3, **characterised in that** the sliding mechanism comprises:
• a notch on each side of the structure, preferably on the lower portion.
• a line of pulley wheels fixed to the pallet jack upon which rest the lower edges of the sides of the structure.
• a line of pulley wheels parallel to the previous line and in a higher position, fixed to the pallet jack and resting against.the lower edge of a notch existing on the sides of the structure.
• an area defined between the lower edge of the notch and the lower edge of the side of the structure that slides as a runner between both lines of pulley wheels, its movement being integral with the rest of the structure.
• at least one stop.

5. PALLET JACK WITH A SUPPORT STRUCTURE according to claim 4, **characterised in that** the edges that are in contact with the pulley wheels incorporate guides in a resistant material.

6. PALLET JACK WITH A SUPPORT STRUCTURE according to claim 4, **characterised in that** the stop is fixed, joined directly to the pallet jack and located within the notch, consisting in a lug-type part that projects horizontally from the pallet jack.

7. PALLET JACK WITH A SUPPORT STRUCTURE according to claim 4, **characterised in that** the means that allow the shifting of the structure are protected by a cover.

8. PALLET JACK WITH A SUPPORT STRUCTURE according to claim 1, **characterised in that** it comprises anchors and openings that coincide and are complementary to the anchors, openings and nuts and bolts existing in the functional device to be incorporated.

9. PALLET JACK WITH A SUPPORT STRUCTURE according to claim 1, **characterised in that** it can optionally incorporate electric connections for communication between the pallet jack and the functional device.

10. PALLET JACK WITH A SUPPORT STRUCTURE according to any of the previous claims, **characterised in that** it is mounted onto a pallet jack and, joined to the top portion of said structure there is a packing device of the type comprising two inverted L-shape branches, an outer and an inner branch, where the outer branch is fixed by the base to the structure described in the previous claims whereas the inner branch rotates by the action of one or more motors and on its vertical arm it has a reel holder that supplies and contributes to tighten the packing material wherein the outer vertical arm is essentially as long as the different between the total height of the machine and the height of the top portion a runner the support structure.

11. PALLET JACK WITH A SUPPORT STRUCTURE characterised according to claim 10, **characterised in that** it incorporates a device to lock the rotation of the inner arm of the packing device if the pallet jack is moving.

## Patentansprüche

1. HUBWAGEN (Palettenheber, Palettenwagen, 1) MIT EINER TRAGSTRUKTUR in Form eines umgekehrten U geeigneter Breite, die mindestens einen oberen Abschnitt (3) und zwei Seitenteile (4,5) umfasst, angemessen groß und geformt ist, um sich an das Hauptgehäuse des Hubwagens anzupassen, und außerdem mit Mitteln ausgestattet ist, um an ihr (der Tragstruktur) eine funktionelle Vorrichtung anzubringen, die sich durch folgende Elemente auszeichnet:
• Mittel (4,9), die eine Vorwärtsverschiebung der Struktur gestatten, bis der obere Abschnitt des Hubwagengehäuses freiliegt;
• Mittel (11,12), um die Stabilität der Anordnung in der verschobenen Position zu gewährleisten.

2. HUBWAGEN MIT EINER TRAGSTRUKTUR gemäß Anspruch 1, **dadurch gekennzeichnet, dass** an seinem Frontabschnitt Verstärkungselemente angebracht sind, die im Wesentlichen aus geschichteten Teilen bestehen, die beide Seiten miteinander verbinden und sich auch mit dem oberen Abschnitt verbinden lassen.

3. HUBWAGEN MIT EINER TRAGSTRUKTUR gemäß den Ansprüchen 1 und 2, **dadurch gekennzeichnet, dass** jene Mittel, die eine Verschiebung nach vorn gestatten, mit zwei oder mehr Gleitelementen - mindestens einem an jeder Seite - versehen sind, die zwischen zwei Reihen am Hubwagen angebrachter Seilrollen (Scheiben) hin und her gleiten, wobei die Bewegung dieser Gleitelemente in die restliche Struktur integriert ist.

4. HUBWAGEN MIT EINER TRAGSTRUKTUR gemäß Anspruch 3, **dadurch gekennzeichnet, dass** der Gleitmechanismus folgende Teile umfasst:
• je eine Kerbe/Aussparung an jeder Seite der Struktur, vorzugsweise in ihrem unteren Abschnitt;
• eine Reihe von Seilrollen, die am Hubwagen befestigt sind und auf die sich die unteren Seitenkanten der Struktur stützen;
• eine Reihe von Seilrollen, die in einer höheren Position parallel zur eben genannten Rollenreihe verlaufen, am Hubwagen befestigt sind und an der Unterkante einer Kerbe/Aussparung an den Seiten der Struktur anliegen.
• eine Fläche zwischen der Unterkante der Kerbe/Aussparung und der Unterkante der seitlichen Struktur, die als Läufer zwischen den beiden Reihen von Seilrollen gleitet und deren Bewegung in die restliche Struktur integriert ist;
• mindestens einen Anschlag.

5. HUBWAGEN MIT EINER TRAGSTRUKTUR gemäß Anspruch 4, **dadurch gekennzeichnet, dass** die mit den Seilrollen in Kontakt stehenden Kanten mit Führungen aus einem widerstandsfähigen Material ausgestattet sind.

6. HUBWAGEN MIT EINER TRAGSTRUKTUR gemäß Anspruch 4, **dadurch gekennzeichnet, dass** der genannte Anschlag direkt und fest am Palettenwagen in der Kerbe/Aussparung befestigt ist und aus einem vorspringenden Teil in Form einer Lasche/Öse besteht, das horizontal aus dem Hubwagen herausragt.

7. HUBWAGEN MIT EINER TRAGSTRUKTUR gemäß Anspruch 4, **dadurch gekennzeichnet, dass** die zur Vorwärtsverschiebung der Struktur vorhandenen Mittel mit einer Abdeckung versehen sind.

8. HUBWAGEN MIT EINER TRAGSTRUKTUR gemäß Anspruch 1, der außerdem Verankerungen und mit denselben übereinstimmende Öffnungen besitzt, welche die Verankerungen, Öffnungen, Schraubenmuttern und Bolzen ergänzen, die in der einzubauenden Funktionsvorrichtung vorhanden sind.

9. HUBWAGEN MIT EINER TRAGSTRUKTUR gemäß Anspruch 1, der wahlweise auch über elektrische Anschlüsse verfügen kann, die als Kommunikationsverbindungen zwischen dem Hubwagen und der Funktionsvorrichtung dienen.

10. HUBWAGEN MIT EINER TRAGSTRUKTUR gemäß einem der vorherigen Ansprüche, die auf dem Hubwagen montiert ist, **dadurch gekennzeichnet, dass** am oberen Abschnitt der genannten Struktur eine Packvorrichtung befestigt ist, die aus zwei Armen (Schenkeln) in Form eines umgekehrten L besteht - einem äußeren und einem Inneren Arm -, wobei der äußere Arm über die Basis an der in den vorherigen Ansprüchen beschriebenen Struktur befestigt ist, während der innere Arm von einem oder mehreren Motoren angetrieben wird und rotiert, wobei der vertikale Arm mit einer Spulenhalterung ausgestattet ist, die das Packmaterial zuführt und spannt, und die Länge des äußeren vertikalen Arms im Wesentlichen der Differenz zwischen der gesamten Maschinenhöhe und der Höhe des oberen Abschnitts entspricht, der sich als Läufer an der Tragstruktur bewegt.

11. HUBWAGEN MIT EINER TRAGSTRUKTUR gemäß der Beschreibung in Anspruch 10, der über eine Vorrichtung verfügt, um die Rotation des inneren Arms der Packvorrichtung während der Bewegung des Hubwagens zu verriegeln.

## Revendications

1. TRANSPALETTE (1) AVEC UNE STRUCTURE DE SUPPORT dans lequel cette structure possède un corps sous forme de U renversé de largeur appropriée, consistant en au moins une portion supérieure (3) et deux côtés (4,5), cette structure ayant la dimension et la forme appropriées pour couvrir et s'adapter au corps principal du transpalette avec des moyens pour fixer un dispositif fonctionnel à ladite structure, **caractérisé en ce qu'**il comprend:
• des moyens (4,9) pour permettre le déplacement vers l'avant de la structure jusqu'à la révélation de la portion supérieure du corps du transpalette.
• des moyens (11,12) pour assurer la stabilité de l'ensemble dans la position déplacée.

2. TRANSPALETTE AVEC UNE STRUCTURE DE SUPPORT selon la revendication 1, **caractérisé en ce que** sur sa portion avant il incorpore des éléments de renfort consistant en des parties essentiellement laminaires qui passent d'un côté à l'autre, et qui peuvent également être unies à la portion supérieure.

3. TRANSPALETTE AVEC UNE STRUCTURE DE SUPPORT selon les revendications 1 et 2 et **caractérisé en ce que** les moyens qui lui permettent de se déplacer vers l'avant comprennent au moins un élément coulissant sur chaque côté qui coulisse entre deux lignes de réas unies au transpalette, son mouvement faisant partie intégrante du reste de la structure.

4. TRANSPALETTE AVEC UNE STRUCTURE DE SUPPORT selon la revendication 3, **caractérisé en ce que** le mécanisme coulissant comprend:
• une entaille sur chaque côté de la structure, de préférence sur la portion inférieure.
• une ligne de réas fixés au transpalette sur lequel s'appuient les bords inférieurs des côtés de la structure.
• une ligne de réas parallèle à la ligne précédente et dans une position plus élevée, fixée au transpalette et appuyée contre le bord inférieur d'une entaille existant sur les côtés de la structure.
• une zone définie entre le bord inférieur de l'entaille et le bord inférieur du côté de la structure qui coulisse comme un sabot entre les deux lignes de réas, son mouvement faisant partie intégrante du reste de la structure.
• au moins une butée.

5. TRANSPALETTE AVEC UNE STRUCTURE DE SUPPORT selon la revendication 4, **caractérisé en ce que** les bords qui sont en contact avec les réas incorporent des guides dans une matière résistante.

6. TRANSPALETTE AVEC UNE STRUCTURE DE SUPPORT selon la revendication 4, **caractérisé en ce que** la butée est fixée, unie directement au transpalette et située à l'intérieur de l'entaille, consistant en une partie de type de languette qui est en porte-à-faux horizontalement depuis le transpalette.

7. TRANSPALETTE AVEC UNE STRUCTURE DE SUPPORT selon la revendication 4, **caractérisé en ce que** les moyens qui permettent le déplacement de la structure sont protégés par une enveloppe.

8. TRANSPALETTE AVEC UNE STRUCTURE DE SUPPORT selon la revendication 1, **caractérisé en ce qu'**il comprend des ancrages et des ouvertures qui coïncident et qui sont complémentaires aux ancrages, ouvertures et écrous existant dans le dispositif fonctionnel à incorporer.

9. TRANSPALETTE AVEC UNE STRUCTURE DE SUPPORT selon la revendication 1, **caractérisé en ce qu'**il peut incorporer optionnellement des connexions électriques pour communiquer entre le transpalette et le dispositif fonctionnel.

10. TRANSPALETTE AVEC UNE STRUCTURE DE SUPPORT selon l'une quelconque des revendications précédentes, **caractérisé en ce qu'**il est monté sur un transpalette et, relié à la portion supérieure de ladite structure il existe un dispositif d'emballage du type comprenant deux branches sous forme de L renversé, une branche extérieure et une branche intérieure, où la branche extérieure est fixée par la base à la structure décrite dans les revendications précédente tandis que la branche intérieure tourne par l'action d'un ou plusieurs moteurs et sur son bras vertical il possède un porte-bobines qui fournit et contribue à serrer la matière d'emballage dans laquelle le bras vertical extérieur est essentiellement aussi long que la différence entre la hauteur totale de la machine et la hauteur de la portion supérieure d'un sabot de la structure de support.

11. TRANSPALETTE AVEC UNE STRUCTURE DE SUPPORT caractérisé selon la revendication 10, **caractérisé en ce qu'**il incorpore un dispositif pour bloquer la rotation du bras intérieur du dispositif d'emballage si le transpalette est en mouvement.
